# EUROPÄISCHE PATENTSCHRIFT

(11) **EP 2 949 095 B1**
(45) Veröffentlichungstag und Bekanntmachung des Hinweises auf die Patenterteilung: **03.10.2018**
(21) Anmeldenummer: 14701357.7
(22) Anmeldetag: 23.01.2014
(51) Int. Cl.: H04L 29/06, H04W 12/04, H04L 9/08, H04L 29/08, G06Q 20/32, G06Q 20/34, H04L 9/32, H04W 4/02, H04W 12/06, H04W 64/00

(54) **DURCHFÜHRUNG EINER POSITIONSABHÄNGIGEN KRYPTOGRAPHISCHEN OPERATION MIT EINEM POSITIONSABHÄNGIGEN KRYPTOGRAPHISCHEN SCHLÜSSEL**
CARRYING OUT A POSITION-DEPENDENT CRYPTOGRAPHIC OPERATION WITH A POSITION-DEPENDENT CRYPTOGRAPHIC KEY
EXÉCUTION D'UNE OPÉRATION CRYPTOGRAPHIQUE DÉPENDANT D'UNE POSITION AVEC UNE CLÉ CRYPTOGRAPHIQUE DÉPENDANT D'UNE POSITION

(30) Priorität: 25.01.2013 DE 102013201245; 04.02.2013 DE 102013201730
(43) Veröffentlichungstag der Anmeldung: 02.12.2015
(73) Patentinhaber: Bundesdruckerei GmbH, 10969 Berlin (DE)
(72) Erfinder: MORGNER, Frank, 15537 Grünheide (DE)
(74) Vertreter: Richardt Patentanwälte PartG mbB
(86) Internationale Anmeldenummer: PCT/EP2014/051295
(87) Internationale Veröffentlichungsnummer: WO 2014/114697

(56) Entgegenhaltungen:
- WO-A2-2005/053209
- US-A1- 2010 278 335
- US-B1- 7 177 426

## Beschreibung

Die Erfindung betrifft ein Verfahren zur Durchführung einer positionsabhängigen kryptographischen Operation durch eine Chipkarte sowie eine dazu eingerichtete Chipkarte und ein Computerprogrammprodukt.

Im Stand der Technik sind verschiedene Systeme zur Bestimmung von Positionsdaten, insbesondere Geopositionsdaten wie z.B. GPS Koordinaten, sowie zur Übertragung der Positionsdaten an Chipkarten bekannt. Die übertragenen Positionsdaten finden für diverse Applikationen Verwendung. Zusätzlich zu Funktionen zur Verarbeitung der Geopositionsdaten können auf der Chipkarte sicherheitsrelevante Funktionen implementiert sein, z.B. kryptographische Verfahren zur Datenverschlüsselung und/oder Authentifizierung von Nutzern oder anderen Datenverarbeitungskomponenten bei der Chipkarte.

Aus dem Stand der Technik ist die Einbeziehung von Informationen über eine räumliche Position oder eine räumliche Entfernung in ein kryptografisches Verfahren grundsätzlich bekannt. Insbesondere offenbaren die Druckschriften EP 2 339 777 A1 und US 7,177,426 B1 jeweils ein kryptografisches Verfahren, das einen kryptografischen Schlüssel nur bei Zufuhr einer vorgegebenen Positionsinformation erzeugt und andernfalls keine Authentifizierung zulässt. Daneben ist aus der Druckschrift EP 2 247 024 A1 ein sog. Distance-Bounding-Verfahren bekannt, das im Verlauf eines kryptografischen Protokolls Messungen der Signallaufzeit vorsieht zur Schätzung des Abstands zwischen den physikalischen Einheiten, die in das typisch drahtlos über eine Funkstrecke ausgeführte Protokoll eingebunden sind.

Vor diesem Hintergrund stellt sich die Aufgabe, ein verbessertes Verfahren zur Durchführung einer kryptographischen Operation mit einem positionsabhängig parametrisierten Schlüssel und Implementierungen davon bereitzustellen.

Diese Aufgabe wird jeweils mit den Merkmalen der unabhängigen Patentansprüche gelöst. Bevorzugte Ausführungsformen sind in den jeweils abhängigen Patentansprüchen angegeben. Sofern nicht ausdrücklich Gegenteiliges zum Ausdruck gebracht wird, können Ausführungsformen frei miteinander kombiniert werden.

Unter einem "Chip" oder "Microchip" wird vorliegend ein integrierter Schaltkreis verstanden, der mehrere elektronische Bauteile bzw. Schaltungselemente wie Transistoren, Widerstände usw. enthalten kann. Je nach Ausführungsform kann ein Chip Bestandteil von Computern, Mobilfunkgeräten, insbesondere Smartphones, Digitalkameras oder anderer, vorzugsweise portabler, Geräte sein. Nach manchen Ausführungsformen ist der Chip Bestandteil eines Dokumentes, insbesondere eines Sicherheitsdokumentes.

Als "Chipkarte" oder "Dokument" wird vorliegend jeglicher Datenträger bezeichnet, welcher einen Mikrochip und eine mit diesem verbundene Antenne aufweist. Vorzugsweise kann die Chipkarte mit einem geeigneten Lesegerät Daten austauschen. Bei der Chipkarte kann es sich um ein Wert- oder Sicherheitsdokument, wie zum Beispiel um ein ID-Dokument, handeln. Ein ID-Dokument kann z.B. ein Ausweisdokument, wie zum Beispiel einen Personalausweis, Reisepass, Führerschein, Fahrzeugbrief, Fahrzeugschein oder Firmenausweis, sein. Bei dem Wertdokument kann es sich z.B. um ein Zahlungsmittel, wie zum Beispiel eine Banknote oder eine Kreditkarte handeln. Das Dokument kann auch ein sonstiger Berechtigungsausweis, zum Beispiel eine Eintrittskarte, ein Fahrschein, insbesondere ein Electronic-Ticket, einen Frachtbrief, ein Visum oder dergleichen, sein. Der Dokumentenkörper des Dokuments kann buchartig ausgebildet sein, wie dies zum Beispiel bei einem Reisepass der Fall sein kann.

Unter einer Chipkarte wird auch ein sogenanntes Funketikett verstanden, welches auch als RFID-Tag oder RFID-Label bezeichnet wird. Die Chipkarte beinhaltet vorzugsweise eine Schnittstelle zum kontaktlosen Datenaustausch mit einem Lesegerät. Je nach Ausführungsform kann die Chipkarte zum Beispiel kunststoff- und/oder papierbasiert sein.

Unter einem "Lesegerät" wird vorliegend ein Datenverarbeitungssystem verstanden, welches mit der Chipkarte Daten austauschen kann. Vorzugsweise beinhaltet der Datenaustausch eine Authentifizierung des Lesegeräts gegenüber der Chipkarte. Nach Ausführungsformen kann das Lesegerät ein Computersystem sein. Das Lesegerät kann Funktionalitäten implementieren, wie sie für Lesegeräte maschinenlesbarer Reisedokumente (MRTD) bekannt sind, insbesondere kryptographische Protokolle, wie zum Beispiel ein Basic Access Control (BAC) und/oder ein Extended Access Control (EAC). Nach manchen Ausführungsformen kann das Lesegerät dazu ausgebildet sein, Daten von der Chipkarte zu lesen und/oder an diese zu senden.

In manchen Anwendungsszenarien ist es notwendig, sicherzustellen, dass ausschließlich ein berechtigtes Lesegerät auf die in der Chipkarte gespeicherten Daten zugreifen kann, so dass sich nach Ausführungsformen das Lesegerät vor dem Auslesen dieser Daten gegenüber der Chipkarte authentisieren muss. Vorzugsweise beinhaltet die Authentifizierung den Nachweis, dass der Eigentümer der Chipkarte die Chipkarte dem Lesegerät willentlich zum Auslesen der Daten verfügbar gemacht hat. Dies kann zum Beispiel dadurch geschehen, dass das Lesegerät Daten, die auf der Oberfläche der Chipkarte sichtbar sind und vom Lesegerät optisch erfasst wurden, an die Chipkarte übermittelt werden als Nachweis, dass der Nutzer die Chipkarte (und die darauf befindlichen optisch erfassbaren Daten) dem Lesegerät willentlich gezeigt hat. Alternativ kann auch ein vom Nutzer in das Lesegerät eingegebenes Geheimnis zur Authentifizierung des Lesegerätes gegenüber der Chipkarte verwendet werden.

Unter "Attributen" wird vorliegend jegliche Form von Daten verstanden. Vorzugsweise beziehen sich Attribute auf Daten, welche den Nutzer einer Chipkarte und/oder dessen Eigentum beschreiben, z.B. personenbezogene Daten wie Kontoinformationen und Fahrzeugdaten.

Unter "Positionsdaten" sind vorliegend jegliche Daten zu verstehen, welche eine Verortung (Lokalisierung) eines bestimmten Gegenstandes und insbesondere des Sensors, der die Positionsdaten ermittelt hat, in Bezug auf einen definierten Fixpunkt oder ein anderweitig definiertes Bezugssystem ermöglichen. Bei Positionsdaten kann es sich um Daten handeln, welche mittels Funk-und Satellitenordnung gewonnen wurden, also insbesondere um GPS-Daten (Global Positioning System), aber auch um Daten, die mittels geodätischer Messmethoden (Lateration, Angulation, Polarmethode) oder sonstiger Verfahren (optische Geländeerkennung, Echoortung) gewonnen wurden. Die Positionsdaten können beispielsweise als planare Koordinaten, kubische Koordinaten, Polarkoordinaten oder als geographische, natürliche Koordinaten oder in einem applikationsspezifischen Format, z.B. als Orts- oder Netzkennung, spezifiziert sein. Es kann sich bei den Positionsdaten also um Kennungen von Netzwerken oder sonstigen Gegenständen oder Signalsendern handeln, welche einzeln oder in Kombination miteinander eine Positionsbestimmung des Sensors ermöglichen.

Unter einer "Lokalisierungseinheit" wird vorliegend ein Gerät oder eine Gerätekomponente verstanden, welche zur automatischen Sensierung der eigenen Position eingerichtet ist. Die eigene Position ist in Form von Positionsdaten spezifiziert und kann von der Lokalisierungseinheit z.B. automatisch in regelmäßigen Abständen und/oder nach Erhalt einer Anfrage von einem anderen Gerät, z.B. von einer Chipkarte, ermittelt und an dieses Gerät gesendet werden. Je nach Ausführungsform kann die Lokalisierungseinheit eine Komponente der Chipkarte sein oder als eigenständiges Gerät ausgebildet und von der Chipkarte räumlich getrennt sein.

Als "Schlüsselableitungsfunktion" (englisch: key derivation function - KDF) wird vorliegend ein deterministischer Algorithmus zum Ableiten eines kryptographischen Schlüssels mit einer vorgegebenen Länge aus einem geheimen Datenwert bezeichnet. Wenn zwei Parteien den gleichen geheimen Wert und die gleiche Schlüsselableitungsfunktion verwenden, erzeugen beide den gleichen kryptographischen Schlüssel.

Als "Distance-Bounding Protokolle" werden vorliegend kryptographische Protokolle bezeichnet, die ein ausreichend schwierig zu fälschendes tatsächliches Indiz dafür liefern, dass der räumliche Abstand zweier physikalischer Einheiten einen vorgegebenen Maximalabstand nicht überschreitet. Gebräuchliche Distance-Bounding Protokolle beruhen darauf, dass eine der physikalischen Einheiten eine Challenge, z.B. in Form eines neu generierten Zufallswertes, an die andere sendet und anhand der Zeitspanne bis zum Empfang einer Antwort errechnen kann, wie weit die antwortende physikalische Einheit maximal entlang der gewählten Übertragungsstrecke räumlich entfernt liegen kann. In diese Berechnung gehen bekannte Größen wie etwa die Geschwindigkeit der Datenübertragung bei der jeweils genutzten Datenübertragungstechnologie (Lichtgeschwindigkeit bei Funk, Schallgeschwindigkeit bei Ultraschall) und vorzugsweise auch die Prozessierungszeit für die Generierung und für den Versand der Antwort ein. Anhand der Dauer zwischen dem Absenden des Challenge bis zum Empfang der zugehörigen Antwort kann eine Schätzung für die räumliche Entfernung zwischen den physikalischen Einheiten bestimmt werden und damit auch, ob diese einen vorgegebenen Maximalabstandes überschreitet oder nicht. Bei einem Distance-Bounding Protokoll kann es sich zum Beispiel um ein Challenge-Response Verfahren handeln. Beispiele für Distance-Bounding Protokolle sind z.B. in Gerhard Hancke, Markus Kuhn: "An RFID distance-bounding protocol", Proceedings SecureComm 2005, und in Stefan Brands, David Chaum: "Distance-bounding protocols (extended abstract)", Proceedings Eurocrypt '93, aufgeführt.

Eine "Authentifizierung" einer Lokalisierungseinheit gegenüber einer Chipkarte besteht aus der Erbringung eines Nachweises einer behaupteten Eigenschaft der Lokalisierungseinheit gegenüber der Chipkarte, die sog. "Authentisierung", in Kombination mit der Prüfung dieses Nachweises und der Akzeptanz der Echtheit der behaupteten Eigenschaft durch die Chipkarte als sog. "Authentifizierung im engeren Sinne". Während sich der Begriff "Authentisierung" auf Schritte bezieht, die von der Lokalisierungseinheit durchzuführen sind, bezieht sich der Ausdruck "Authentifizierung im engeren Sinne" auf Schritte, die von der Chipkarte durchzuführen sind. Der Begriff "Authentifizierung" im Allgemeinen bezieht sich auf den gesamten Prozess. Im Folgenden wird deshalb unter Authentifizierung der Gesamtprozess beinhaltend die Authentisierung verstanden.

In einem Aspekt betrifft die Erfindung ein Verfahren zur Durchführung einer kryptographischen Operation. Das Verfahren umfasst einen Abschnitt zum Ermittlung oder Empfang von ersten Positionsdaten durch eine Lokalisierungseinheit, wobei die Positionsdaten die Position der Lokalisierungseinheit angeben. Ein weiterer Abschnitt zielt auf die Übermittlung der Positionsdaten von der Lokalisierungseinheit an die Chipkarte über eine kontaktlose Schnittstelle unter Verwendung eines kryptographischen Protokolls. Ein nachfolgender Abschnitt umfasst die Ausführung eines Distance-Bounding Protokolls zwischen der Chipkarte und der Lokalisierungseinheit, wobei das Distance-Bounding Protokoll genau dann erfolgreich abschließt, wenn der räumliche Abstand zwischen der Chipkarte und der Lokalisierungseinheit einen Maximalabstand nicht überschreitet. Schließlich erfolgt in einem letzten Abschnitt nur im Falle eines erfolgreichen Abschlusses des Distance-Bounding Protokolls, die Ausführung einer Chipkartenfunktion durch die Chipkarte, wobei die Chipkartenfunktion die übermittelten Positionsdaten als die ersten Positionsdaten zur Angabe der aktuellen Position der Chipkarte verwendet. Weiterhin umfasst das Verfahren einen Abschnitt zum Zugriff der Chipkarte auf einen Datenwert, welcher in einem geschützten Speicher der Chipkarte gespeichert ist oder von einem Nutzer der Chipkarte manuell eingegeben wird. Ferner umfasst das Verfahren einen Abschnitt zum Anwenden einer Schlüsselableitungsfunktion durch die Chipkarte auf den Datenwert und die ersten Positionsdaten zur Generierung eines ersten positionsabhängigen kryptographischen Schlüssels. Schließlich umfasst das Verfahren einen Abschnitt zur Verwendung des ersten positionsabhängigen kryptographischen Schlüssels durch die Chipkarte zur Durchführung einer schlüsselabhängigen kryptographischen (Teil-)operation.

Dies kann vorteilhaft sein, weil der generierte Schlüssel von der Position des Ortes, wo dieser erzeugt wird, abhängt. Durch die Verschränkung der Ortsinformation mit kryptographischen Funktionen in Form eines positionsabhängigen Schlüssels kann also sichergestellt werden, dass die diesen Schlüssel verwendende kryptographische Operation von einer Chipkarte ausgeführt wird, welche sich an einem bestimmten Ort oder innerhalb eines bestimmten Gebietes befindet oder zumindest zum Zeitpunkt der Positionsbestimmung und Schlüsselerzeugung befand. Die enge Verschränkung von Positionsdaten mit der kryptographischen Funktion kann die Ausführung ortsgebundener, sicherheitsbezogener kryptographischer Funktionen beschleunigen, da die Ortsgebundenheit implizit bei der Schlüsselgenerierung bereits erfolgt. Nach Ausführungsformen wird das oben genannte Verfahren von der Chipkarte an einer Vielzahl von unterschiedlichen Orten durchgeführt, wobei jeweils ein für den aktuellen Ort spezifischer, positionsgebundener Schlüssel mit den Positionsdaten des aktuellen Ortes erzeugt wird. Dies hat den Vorteil, dass auch im Falle der Kompromittierung eines geheimen positionsabhängigen Schlüssels eines bestimmten Ortes die Sicherheit der Schlüssel aller anderer Orte davon nicht berührt sind, da es für Dritte keine Möglichkeit gibt, von einem positionsabhängigen Schlüssel die anderen positionsabhängigen Schlüssel zu errechnen.

Nach Ausführungsformen der Erfindung prüft die Chipkarte, ob eine Zeitdauer, die zwischen dem Empfang bzw. der Ermittlung der Positionsdaten und der Generierung des ersten positionsabhängigen Schlüssels vergangen ist, kürzer ist als ein Schwellenwert. Der erste positionsabhängige Schlüssel wird nur dann erzeugt und/oder die kryptographische Operation wird nur dann durchgeführt, wenn die Zeitdauer kürzer als der Schwellenwert ist. Dies kann dazu dienen, sicherzustellen, dass sich die Chipkarte auch noch während der Schlüsselgenerierung bzw. während der Durchführung der kryptographischen Operation an einem Ort oder in einem Gebiet befindet, welches durch die Positionsdaten, welche in den generierten Schlüssel eingingen, identifiziert wird. Je höher der Schwellenwert desto höher also auch die Toleranz hinsichtlich der genauen Position der Chipkarte, um mit dem positionsabhängigen Schlüssel noch kryptographische Operationen durchführen zu können. Nach Ausführungsformen ist der Schwellenwert durch einen Nutzer und/oder automatisch durch eine auf der Chipkarte ausgeführte Applikation konfigurierbar.

Nach Ausführungsformen handelt es sich bei dem Datenwert um einen kryptographischen Schlüssel oder ein Passwort mit dem sich ein Nutzer der Chipkarte gegenüber der Chipkarte authentifizieren kann. Das Passwort kann z.B. von einem Nutzer bei der Authentifizierung gegenüber der Chipkarte manuell über ein Terminal mit Tastatur oder PIN-Pad eingegeben und an die Chipkarte übertragen werden. Die Verwendung eines eingegebenen Passworts kann vorteilhaft sein, weil dadurch eine Verschränkung von Nutzerauthentifizierung, dem Ort, wo die Chipkarte sich befindet, und einer kryptographischen Operation bewirkt wird. Die Menge an Daten, die der Nutzer manuell eingeben muss, wird dadurch reduziert. Zudem kann die Sicherheit weiter erhöht werden, wenn das Passwort nicht in der Chipkarte gespeichert ist.

Nach Ausführungsformen geben die ermittelten ersten Positionsdaten die Position der Chipkarte an. Alternative stammen die empfangenen ersten Positionsdaten von einer sendenden Lokalisierungseinheit und geben deren Position an, die im Fall, dass die Lokalisierungseinheit von der Chipkarte um nicht mehr als einen vorgegebenen Maximalabstand entfernt ist, als Näherung für die Position der Chipkarte verwendet wird. Der Empfang von Positionsdaten von einer Lokalisierungseinheit kann vorteilhaft sein, da die Chipkarte in diesem Fall nicht selbst über eine Lokalisierungseinheit verfügen muss und günstiger hergestellt werden kann. Zudem kann die gleiche externe Lokalisierungseinheit von einer Vielzahl von Chipkarten für unterschiedliche Zwecke genutzt werden.

Nach Ausführungsformen handelt es sich bei der kryptographischen Operation um eine Generierung einer Signatur, eine Signaturprüfung, eine Verschlüsselung eines oder mehrerer Attribute, oder eine Entschlüsselung eines oder mehrerer Attribute. Die Signatur kann z.B. für ein oder mehrere Attribute, die in dem Speichermedium der Chipkarte geschützt gespeichert sind, erzeugt werden. Die Verschlüsselung kann eine Verschlüsselung dieser Attribute darstellen. Die Entschlüsselung und Signaturprüfung bezieht sich vorzugsweise auf signierte bzw. verschlüsselte Attribute, die von einem Computersystem verschlüsselt bzw. signiert wurden und von diesem an die Chipkarte übertragen wurden.

Nach Ausführungsformen umfasst die Schlüsselableitungsfunktion eine Konkatenierung des Datenwerts mit den ersten Positionsdaten. Die ersten Positionsdaten bestehen aus ein oder mehreren Datenelementen, wobei die Konkatenierung gemäß eines vorgegebenen Sortierschemas von dem Datenwert und den ersten Positionsdaten erfolgt. Im Falle dass die Positionsdaten aus mehreren Datenelementen bestehen werden die Datenelemente ebenfalls gemäß des Sortierschemas sortiert konkateniert. Dies ermöglicht eine deterministische Ableitung der positionsabhängigen Schlüssel ausgehend von einer Vielzahl an zu verknüpfenden Datenelementen.

Nach Ausführungsformen verwendet die Schlüsselableitungsfunktion zusätzlich einen Zufallswert als sog. "Seed" für die Generierung des ersten positionsabhängigen kryptographischen Schlüssels. Die Verwendung eines Zufallswertes kann die Sicherheit des Schlüssels erhöhen, was insbesondere dann vorteilhaft ist, falls es sich bei dem Datenwert um ein Passwort handelt, welches Bestandteil eines Lexikons ist, sodass dieses Passwort alleine nicht ausreicht, um den nötigen Grad an Sicherheit zu bewirken.

Die Reihenfolge der konkatenierten Datenelemente bzw. des Datenwertes erfolgt dabei gemäß eines vordefinierten Sortierschemas, z.B. einem alphabetischen oder numerischen Sortierschema. Die Sortierung kann auf der binären Ebene des Datenwertes bzw. der Datenelemente erfolgen oder, falls der Datenwert z.B. ein Passwort ist und als Textstring repräsentiert ist, auch z.B. auf Basis des Textstrings. Im Folgenden sollen einige Schlüsselableitungsfunktionen beispielhaft aufgeführt werden, wobei KP den ersten positionsabhängigen Schlüssel, G1, G2, ...Gn jeweils ein Datenelement, z.B. eine Netzkennung der Netze N1, N2, ..., Nn, bezeichnet, K den Datenwert, S den Zufallswert ("Seed"), M die maximale Länge des Schlüssels KP und das Symbol "||" eine Konkatenierung bezeichnet.
*KDF1:* KP = G1 || G2 || ...|| Gn || K
   Falls die Positionsdaten aus nur einem Datenelement G, z.B. einer Ortskennung, bestehen, gilt entsprechend: KP = G||K
*KDF2:* KP = F((G1 || G2 || ...|| Gn), S, K), wobei F eine mathematische Funktion, z.B. eine Multiplikation von S mit K, eine Addition von S und K, etc. darstellen kann. Dabei kann ein Zwischenwert generiert werden, der z.B. mit dem konkatenierten Wert aller Datenelemente durch eine weitere Rechenoperation (Konkatenierung, Multiplikation, etc.) verknüpft werden kann.
*KDF3:* KP = G1 || G2 || ...|| Gn || K || O, wobei O für ein oder mehrere zusätzliche Parameter stehet, z.B. Zeit, Nutzer-ID, etc., die dazu dienen können, den Schlüssel KP auch von weiteren Faktoren abhängig zu machen.

Nach Ausführungsformen beinhaltet die Schlüsselableitungsfunktion zwei weitere Schritte: zuerst wird aus dem z.B. durch Konkatenierung gewonnenen ersten positionsabhängigen Schlüssel ein Hashwert oder ein anderer komprimierter Datenwert mittels einer deterministischen Abbildungsfunktion gebildet. Dieser Hashwert bzw. komprimierte Datenwert wird auf eine vorgegebene Länge M gekürzt und das Kürzungsresultat als der erste positionsabhängige kryptographische Schlüssel verwendet. Dies ermöglicht die Generierung von kryptographischen Schlüsseln vorgegebener Länge.

### KDF4 (als Pseudocode):

INT ist ein invariabler Integer Wert, vorzugsweise 4 oder höher.

Bestimme MM als einen Maximalwert aus hLen und M, wobei hLen die Länge des Outputs einer Hashfunktion "Hash" in Bytes angibt und M die maximale Länge des zu generierenden Schlüssels KP in Bytes;
Für jeden Zählwert Z von 0 bis MM-1 führe aus:{
Temporärer Wert C=IntegerZuString(Z, INT);
KP= (KP||Hash(K || C || [G1|| G2|| ...|| Gn]))}
KP = die ersten M Bytes von KP.

### KDF5 (als Pseudocode):

Es gelten:
P: Konkatenierungsprodukt aus einem Passwort K als Bytestring und den Positionsdaten, z.B. K || [G1|| G2|| ...|| Gn,
S: Zufallswert, ein 8-Bytestring;
C: ein positive Integer;
M die maximale Länge des zu generierenden Schlüssels KP in Bytes; Hash: Hashfunktion mit Output von M Bytes Länge;
Falls M > hLen, dann Abbruch mit Fehlermeldung "KP ist zu lang!"; T1 = Hash(P || S) 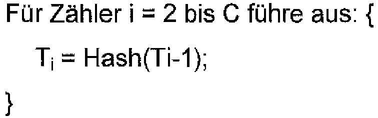
KP= die ersten M Bytes von T_{C}.

Nach Ausführungsformen umfasst das Verfahren weiterhin einen auf einem Lesegerät und/oder Computersystem auszuführenden Abschnitt zum Bereitstellen eines kryptographischen Referenzschlüssels, der mit dem ersten positionsabhängigen Schlüssel identisch ist oder ein asymmetrisches kryptographisches Schlüsselpaar bildet. Dies erfolgt entweder durch direktes Auslesen des kryptographischen Referenzschlüssels aus einem operativ mit dem Computersystem gekoppelten geschützten Speichermedium oder alternativ durch Generieren des kryptographischen Referenzschlüssels. Die Generierung umfasst dabei die Ermittlung oder den Empfang von zweiten Positionsdaten durch das Computersystem, den Zugriff auf den Datenwert, welcher in einem an das Computersystem operativ gekoppelten Speicher ebenfalls geschützt gespeichert ist oder manuell in das Computersystem eingegeben wird, und das Anwenden der Schlüsselableitungsfunktion auf den Datenwert und die zweiten Positionsdaten. Anschließend folgen weitere zwischen der Chipkarte und dem Computersystem durchzuführende Abschnitte zur Authentifizierung des Computersystems gegenüber der Chipkarte und, im Falle einer erfolgreichen Authentifizierung, zur Durchführung einer zu der kryptographischen Teiloperation komplementären kryptographischen Operation mit dem kryptographischen Referenzschlüssel auf zumindest einem Attribut, welches vor oder nach Durchführung der komplementären kryptographischen Operation zwischen der Chipkarte und dem Computersystem ausgetauscht wird.

Das Lesen des kryptographischen Referenzschlüssels beinhaltet ein Lesen des kryptographischen Referenzschlüssels von einem geschützten Speichermedium, das operativ an das Computersystem gekoppelt ist.

Das Speichern eines vorberechneten Referenzschlüssel kann das Verfahren beschleunigen, da eine mehrfache Berechnung des Referenzschlüssels nicht notwendig ist. Demgegenüber hat eine Berechnung des Referenzschlüssels den Vorteil, dass das System flexibler ist und z.B. verwendet werden kann, um festzustellen bzw. sicherzustellen, dass sich Computersystem und Chipkarte am gleichen Ort bzw. im gleichen Gebiet befinden, ohne dass der zu dem Ort gehörige Referenzschlüssel vorberechnet und der Ort damit fix vorgegeben werden müsste.

Nach Ausführungsformen überträgt die Chipkarte die Positionsdaten, mit welcher der erste positionsabhängige kryptographische Schlüssel generiert wurde, an das Computersystem in unverschlüsselter Form. Das Computersystem kann eine Vielzahl von Referenzschlüsseln für eine entsprechende Vielzahl von Orten, die jeweils durch entsprechende Positionsdaten eindeutig identifizierbar sind, gespeichert haben. Die positionsabhängigen Schlüssel können dabei mit den jeweiligen zur Schlüsselgenerierung verwendeten Positionsdaten verknüpft in einem für das Computersystem zugreifbaren Speichermedium gespeichert sein. Durch die Übermittlung der Positionsdaten wird dem Computersystem somit die Auswahl des passenden Referenzschlüssels zur Durchführung einer komplementären kryptographischen Operation aus der Vielzahl gespeicherter Schlüssel ermöglicht.

Bei dem Computersystem kann es sich beispielsweise um ein Terminal handeln, welches ein Lesegerät mit kontaktlosen oder konaktbehafteten Schnittstellen zum direkten Datenaustausch mit der Chipkarte umfasst. Es kann sich aber auch um ein beliebiges weiteres Computersystem, z.B. ein Computersystem eines Nutzers, eines Online-Dienstes oder eines ID-Providers handeln, welches vermittelt durch das Terminal Daten mit der Chipkarte über ein Netzwerk austauschen kann. Durch die Verwendung eines identischen oder kryptografisch komplementären Referenzschlüssels kann das Computersystem sicherstellen, dass sich die Chipkarte bei der Durchführung der kryptographischen Operation in einem bestimmten räumlichen Gebiet befindet, z.B. in einem besonders geschützten Raum oder Gebäude einer Firma. Beispielsweise können mit dem Referenzschlüssel verschlüsselte und an die Chipkarte übertragene Attribute von der Chipkarte nur dann entschlüsselt werden, wenn diese sich an der zu dem Referenzschlüssel gehörenden Position befindet. In anderen Anwendungsszenarien kann das Computersystem, insbesondere ein Server zur Zahlungsabwicklung oder Rechnungsstellung, sicherstellen, dass z.B. nutzerspezifische Attribute wie etwa Kontoinformationen nur dann aus der Chipkarte ausgelesen werden, wenn die Chipkarte und damit der Nutzer sich innerhalb eines Ortes befinden, in welchem die zu zahlende Dienstleistung angeboten wird. Beispielsweise überträgt die Chipkarte einen mit dem positionsabhängigen Schlüssel signierten Zufallswert an das Computersystem, das mit seinem Referenzschlüssel prüft, ob sich die Chipkarte innerhalb eines vorgegebenen Maximalabstandes von einem Kassensystem befindet. Eine Finanztransaktion zu einem bestimmten Produkt, das der Kunde an der Kasse kauft, wird nur dann eingeleitet, wenn die Signaturprüfung ergibt, dass sich die Chipkarte innerhalb des Maximalabstandes befindet. Das Computersystem kann durch die Verwendung eines Referenzschlüssels also sicherstellen, dass die Chipkarte, der einen bestimmten Dienst in Anspruch nimmt, sich tatsächlich dort befindet wo der Dienst angeboten wird oder angeboten werden soll. Die Inanspruchnahme eines solchen Dienstes könnte beispielsweise in einem Kauf eines Produktes an einer Kasse eines Ladengeschäfts sein oder eine Fahrt mit einem öffentlichen Verkehrsmittel entlang einer bestimmten Strecke bestehen, wobei die Zustiegs- und Ausstiegspunkte des Nutzers der Chipkarte automatisch durch Terminals an den Türen der Fahrzeuge mittels der Chipkarte registriert werden. So könnten die Zustiegs- und Ausstiegshaltestellen des Nutzers als die ersten Positionsdaten von Lokalisierungseinheiten ermittelt und durch die Chipkarte beim Ein- bzw. Aussteigen jeweils als die ersten Positionsdaten erfasst und zur Generierung von je einem haltestellenabhängigen Schlüssel verwendet werden.

Der Schlüssel kann in einer kryptographischen Operation durch die Chipkarte verwendet werden, um sensible Daten, die in der Chipkarte gespeichert sind, wie beispielsweise Kontodaten des Nutzers, zu verschlüsseln und an das Computersystem zu übertragen, das wiederum beispielsweise für die Abrechnung der Fahrentgelte eingerichtet sein kann. Das Computersystem hat für jede der verwalteten Haltestellen einen entsprechenden Referenzschlüssel gespeichert und kann mit diesem eine zu der kryptographischen Operation der Chipkarte komplementäre kryptographische Operation durchführen, beispielsweise eine Entschlüsselung von verschlüsselt übertragenen (Konto-)daten des Nutzers. Vorzugsweise können die Positionsdaten zusätzlich in unverschlüsselter Form von der Chipkarte an das Computersystem übertragen werden, um dem Computersystem die Auswahl des richtigen Referenzschlüssels für die Einstiegs- bzw. Ausstiegshaltestelle zu ermöglichen.

Auch könnte es sich bei dem Dienst um einen Mautdienst für Kraftfahrzeuge handeln. Für eine solche Anwendung könnte in der Chipkarte beispielsweise eine Fahrzeugkennung, das von dem Mautdienst erfasst werden soll, gespeichert ist. Die Fahrzeugkennung kann mit dem positionsabhängigen Schlüssel verschlüsselt und an einen Dienstanbieter zur Erhebung der Maut übertragen werden. Dies kann beispielsweise in regelmäßigen zeitlichen Abständen erfolgen, wobei je nach Position ein anderer positionsabhängiger Schlüssel generiert und zur Verschlüsselung verwendet wird.

Nach Ausführungsformen kann es sich bei der komplementären kryptographischen Operation um die Prüfung der zuvor generierten Signatur handeln, wobei das zumindest eine Attribut in der Chipkarte geschützt gespeichert und nach der Signierung durch die Chipkarte an das Computersystem zur Durchführung der Prüfung der Signatur übertragen wird. Alternativ kann es sich bei der komplementären kryptographischen Operation um die Signierung des zumindest einen Attributs handeln, wobei für die hierbei erzeugte Signatur zu einem späteren Zeitpunkt eine Signaturprüfung vorgenommen wird, wobei das zumindest eine Attribut in dem Computersystem geschützt gespeichert ist und nach Signierung durch das Computersystem an die Chipkarte übertragen wird. Wiederum alternativ kann es sich bei der komplementären kryptographischen Operation um die Entschlüsselung des zumindest einen Attributs handeln, welches zuvor verschlüsselt wurde, wobei das zumindest eine Attribut in der Chipkarte geschützt gespeichert ist und nach Verschlüsselung durch die Chipkarte an das Computersystem zur Entschlüsselung durch das Computersystem übertragen wird. Wiederum alternativ kann es sich bei der komplementären kryptographischen Operation um die Verschlüsselung des zumindest einen Attributs handeln, welches an einem späteren Zeitpunkt nachfolgend entschlüsselt wird, wobei das zumindest eine Attribut in dem Computersystem geschützt gespeichert und nach Verschlüsselung durch das Computersystem an die Chipkarte zur Entschlüsselung durch die Chipkarte übertragen wird.

Nach Ausführungsformen beinhaltet das Verfahren ferner eine Authentifizierung der Lokalisierungseinheit gegenüber der Chipkarte. Die Authentifizierung kann die Erbringung eines Nachweises mittels des Distance-Bounding-Protokolls, dass sich die Lokalisierungseinheit innerhalb des räumlichen Maximalabstands befindet, beinhalten. Dadurch kann sichergestellt werden, dass die empfangenen Positionsdaten von einer Lokalisierungseinheit in der Nähe der Chipkarte stammen und nicht etwa von einer anderen, weiter entfernt liegenden Lokalisationseinheit, stammen, welche gefälschte Positionsinformationen senden könnte.

Nach Ausführungsformen umfassen die Positionsdaten eine Anzahl von Ortskennungen, welche in ihrer Gesamtheit einen Ort, an dem sich die Chipkarte bzw. die Lokalisationseinheit befindet, identifizieren. Bei den Ortskennungen kann es sich beispielsweis um Identifikatoren eines geographischen Bezirks, Postleitzahlen, Gebäudenummern oder Raumnummern handeln.

Nach Ausführungsformen stellt jede Ortskennung aus der Vielzahl an Ortskennungen eine Netzkennung dar. Jede Netzkennung identifiziert dabei ein Datenkommunikationsnetz, in dessen Sendebereich sich die Chipkarte bzw. die Lokalisationseinheit befindet.

Jede Netzkennung identifiziert ein Datenkommunikationsnetz, in dessen Sendebereich sich die Chipkarte bzw. die Lokalisationseinheit befindet, welche diese Positionsdaten ermittelt. Bei dem Datenkommunikationsnetz kann es sich beispielsweise um WLAN-Netze privater Haushalte und/oder öffentlicher Institutionen handeln. Alternativ dazu kann es sich auch um die Sendebereiche verschiedener Radiosender handeln, deren Netzkennungen die Lokalisierungseinheit erfassen kann. Beispielsweise ermöglicht das Radio Data System (RDS) die Übermittlung von Zusatzinformationen über das Radionetz. Diese Zusatzinformationen können insbesondere den Programme Service Name (PS) beinhalten, der den Sendernamen in Form von bis zu acht alphanumerischen Zeichen angibt. Der individuell vergebene WLAN-Netz-Name bzw. der PS Sendername kann hier jeweils als Netzkennung dienen.

In Kombination mit einer geographischen Karte, in welchem die Gebiete der einzelnen Netze einschließlich deren Überlappungsbereiche enthalten sind, ist es also möglich anhand von ein oder mehreren Netzkennungen einen bestimmten geographischen Ort bzw. ein geographisches Gebiet zu erkennen und dessen Ortskennung zu ermitteln. Die Karte kann dabei auf der Lokalisierungseinheit und/oder der Chipkarte gespeichert sein oder auf einem entfernten Computer, auf den die Chipkarte bzw. Lokalisierungseinheit Zugriff hat. Alternativ zur Karte kann auch eine Zuordnungstabelle verwendet werden, welche jeder Kombination von Netzkennungen eine bestimmte Ortskennung zuweist. Eine Ortskennung ist dabei ein Identifikator eines bestimmten Ortes bzw. Gebietes.

Nach Ausführungsformen umfasst das Verfahren ferner eine Ermittlung der einen Ortskennung anhand der Vielzahl von Ortskennungen. Die Ermittlung kann auf Seiten der Chipkarte mithilfe einer Karte oder einer Zuordnungstabelle erfolgen. Alternativ dazu kann die Ermittlung auch durch die Lokalisierungseinheit erfolgen, wobei die Lokalisierungseinheit zumindest Lesezugriff die geographische Karte bzw. die Zuordnungstabelle hat, die in einem Speicher gespeichert ist, der operativ an die Lokalisierungseinheit gekoppelt ist. Der Ausdruck "operativ an eine Lokalisierungseinheit gekoppelt" bezeichnet ein Speichermedium, welches integraler Bestandteil der Lokalisierungseinheit ist oder welches über ein Netzwerk mit der Lokalisierungseinheit verbunden ist. Die Lokalisierungseinheit hat dabei zumindest Lesezugriff auf die Daten des Speichermediums.

Beispielsweise kann die Ermittlung der Ortskennung aus mehreren Netzkennungen folgendermaßen erfolgen: die Lokalisierungseinheit befindet sich in einem Gebiet, innerhalb welchem Radiosignale der Sender S1, S4 und S5 empfangen werden können mit einer Signalstärke, die über einem vordefinierten Schwellenwert liegt. Signale anderer Radiosender wie etwa S3 oder S455 werden in diesem Gebiet jedoch nicht bzw. nicht in hinreichender Stärke empfangen. Die Lokalisierungseinheit kann eine geographische Karte oder eine Zuordnungstabelle gespeichert haben, welche einer bestimmten Kombination an Netzkennungen {S1, S4 und S5} genau eine Ortskennung ("Gebiet Nr. 388") zuordnet. Diese Ortskennung wird mit Hilfe der Karte bzw. der Zuordnungstabelle durch die Lokalisierungseinheit ermittelt und als die Positionsdaten an die Chipkarte übermittelt. Alternativ kann sich die geographische Karte bzw. die Zuordnungstabelle auch auf einem Speichermedium befinden, welches an einen entfernten Server operativ gekoppelt ist. In diesem Fall sendet die Lokalisierungseinheit eine Anfrage an den Server, die die drei Netzkennungen S1, S4 und S5 enthält. Die Anfrage kann über ein Netzwerk, z.B. das Internet gesendet werden. Der Server ermittelt daraus unter Verwendung der Karte bzw. der Zuordnungstabelle die Ortskennung und gibt diese an die Lokalisierungseinheit zurück. Die Lokalisierungseinheit übermittelt dann die Ortskennung an die Chipkarte als die Positionsdaten. Alternativ kann die Lokalisierungseinheit auch die ermittelten Netzkennungen als die Positionsdaten an die Chipkarte senden, sofern die Chipkarte dazu in der Lage ist, diese zur Bestimmung einer Ortskennung (alleine oder in Interoperation mit einem entfernten Server) zu verwenden. Wiederum alternativ können die beschriebenen Funktionen der Lokalisierungseinheit vollständig in der Chipkarte implementiert sein.

In einem weiteren Aspekt betrifft die Erfindung ein Computerprogrammprodukt mit von einem Computersystem ausführbaren Instruktionen zur Durchführung eines Verfahrens nach einer der oben beschriebenen Ausführungsformen oder einer Kombination davon.

In einem weiteren Aspekt betrifft die Erfindung eine Chipkarte. Die Chipkarte umfasst dazu ein Speichermedium zur geschützten Speicherung eines Datenwertes und/oder eine Schnittstelle zur manuellen Eingabe des Datenwertes durch einen Nutzer, dem die Chipkarte zugeordnet ist, sowie Mittel zur Ermittlung oder zum Empfang von ersten Positionsdaten. Die Chipkarte ist weiterhin ausgebildet zum Zugriff auf den gespeicherten oder eingegebenen Datenwert, zum Anwenden einer Schlüsselableitungsfunktion auf den Datenwert und die ersten Positionsdaten zur Generierung eines ersten positionsabhängigen kryptographischen Schlüssels und zum Verwenden des ersten positionsabhängigen kryptographischen Schlüssels zur Durchführung einer kryptographischen (Teil-)Operation.

Nach Ausführungsformen geben die ermittelten ersten Positionsdaten in einer ersten Alternative die Position der Chipkarte an. In einer zweiten Alternative stammen die empfangenen ersten Positionsdaten von einer sendenden Lokalisierungseinheit und geben damit deren Position an, die allerdings im Fall, dass deren Abstand von der Chipkarte einen vorgegebenen Maximalabstand nicht überschreitet, als Näherung für die Position der Chipkarte verwendet wird.

Nach Ausführungsformen sind die Mittel zum Empfang der ersten Positionsdaten als kontaktlose Schnittstelle zum Empfang der ersten Positionsdaten von einer Lokalisierungseinheit ausgebildet. Die ersten Positionsdaten werden in verschlüsselter Form von der Lokalisierungseinheit an die Chipkarte übertragen. Die Chipkarte umfasst ferner einen kryptographischen Schlüssel zur Entschlüsselung der empfangenen ersten Positionsdaten und ein Distance-Bounding (DB)-Modul, welches zur Ausführung eines Distance-Bounding Protokolls zwischen der Chipkarte und der Lokalisierungseinheit ausgebildet ist. Das Distance-Bounding Protokoll dient zum Zwecke der Erbringung eines Nachweises durch einen Geprüften, dass dieser sich innerhalb eines räumlichen Maximalabstandes von einem Prüfer befindet.

Im Weiteren werden Ausführungsformen der Erfindung mit Bezugnahme auf die Zeichnungen näher erläutert. Darin zeigen:
- Figur 1: ein Blockdiagramm einer Chipkarte, einer Lokalisierungseinheit, eines Terminals und eines weiteren Computersystems,
- Figur 2: ein Flussdiagramm einer Ausführungsform eines positionsabhängigen kryptografischen Verfahrens, und
- Figur 3: ein schematisches Anwendungsszenario mit einer Chipkarte und einer Lokalisierungseinheit in einem Maut-System.

Elemente der nachfolgenden Ausführungsformen, die einander entsprechen, werden mit denselben Bezugszeichen gekennzeichnet.

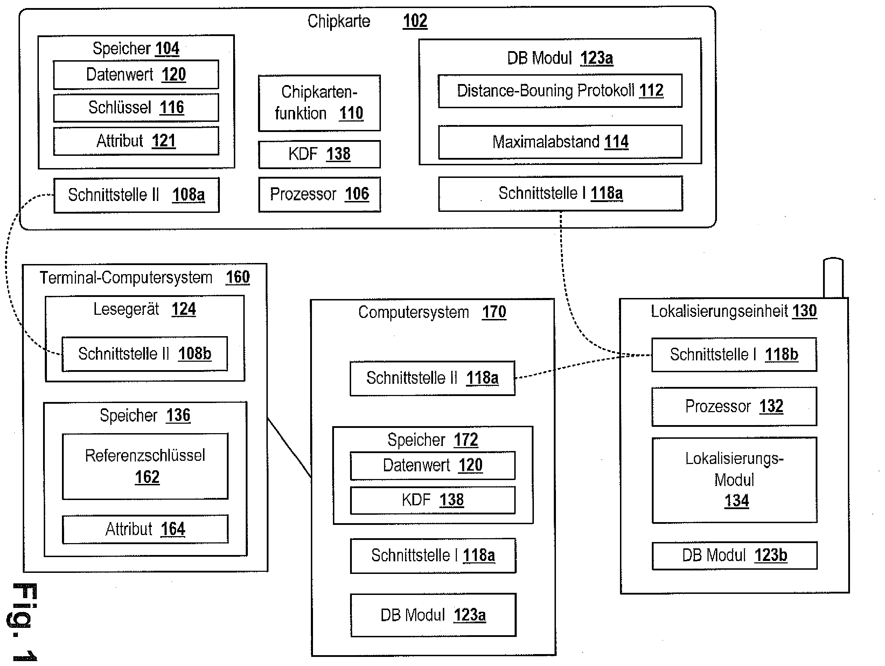

Die **Figur 1** zeigt eine Chipkarte 102 mit einem Speicher 104 in welchem ein Datenwert 120 geschützt gespeichert ist. Außerdem kann der Speicher ein oder mehrere Attribute 121 enthalten. Die Chipkarte besitzt einen Prozessor 106 welche in der Lage ist, eine Schlüsselableitungsfunktion 138 sowie eine Chipkartenfunktion 110 auszuführen. Außerdem kann die Chipkarte ein Distance-Bounding Modul 123a besitzen, das zusammen mit einer Lokalisierungseinheit 130 ein Distance-Bounding Protokoll 112 durchführen kann. Das Distance-Bounding Protokoll kann chipkartenseitig so konfiguriert sein, dass bei dessen Ausführung geprüft wird, ob eine Lokalisierungseinheit 130, von welcher über eine Schnittstelle 118 Positionsdaten empfangen werden, sich innerhalb des räumlichen Maximalabstandes 114 befindet. Außerdem kann die Chipkarte 102 über eine Schnittstelle 108 verfügen, über welches ein Terminal-Computersystem 160 sich gegenüber der Chipkarte 102 authentifizieren und mit der Chipkarte Daten austauschen kann. Bei der Schnittstelle 108 kann es sich um eine kontaktlose oder eine kontaktbehaftete Schnittstelle handeln.

Eine Lokalisierungseinheit 130 beinhaltet einen Prozessor 132 zur Ausführung eines Lokalisierungsmoduls 134. Das Lokalisierungsmodul ist in der Lage, die Position der Lokalisierungseinheit zu bestimmen. Beispielsweise kann es sich bei dem Lokalisierungsmodul um einen GPS Sensor handeln oder um einen Sensor für WLAN-oder Radio-Netze, welche jeweils eine Netzkennung ausstrahlen, mit deren Hilfe das Lokalisierungsmodul eine Ortskennung des Ortes, in dem sich die Lokalisierungseinheit befindet, ermitteln kann. Die ermittelte Ortskennung dient als die Positionsdaten und wird über die Schnittstelle 118 an die Chipkarte übermittelt. Die Lokalisierungseinheit kann immobil oder mobil ausgestaltet sein und kann bei immobiler Installation auch eine für diese individuelle Gerätekennung, die als Ortskennung dient, gespeichert haben.

Vorzugsweise besitzt die Lokalisierungseinheit eine Distance-Bounding Modul 123b, um zusammen mit dem Distance-Bounding-Modul 123a der Chipkarte das Distance-Bounding Protokoll 112 durchzuführen. Dabei kann die Lokalisierungseinheit nachweisen, dass sie sich innerhalb eines räumlichen Maximalabstandes 114 relativ zu der Chipkarte befindet. Dieser Nachweis kann zur Authentifizierung der Lokalisierungseinheit gegenüber der Chipkarte dienen. Dadurch kann sichergestellt werden, dass die Lokalisierungseinheit nachweislich in hinreichender räumlicher Nähe zu der Chipkarte gelegen ist, so dass die von der Lokalisierungseinheit bestimmten Positionsdaten näherungsweise als die Positionsdaten der Chipkarte verwendet werden können. Außerdem kann dadurch ausgeschlossen werden, dass eine weiter entfernt gelegene Lokalisierungseinheit falsche Positionsdaten an die Chipkarte übermittelt. Bei anderen Ausführungsformen ist die Lokalisierungseinheit integraler Bestandteil der Chipkarte. In diesem Fall können die von der Lokalisierungseinheit empfangenen Positionsdaten als richtig und authentisch akzeptiert werden, so dass die Notwendigkeit der Durchführung eines Distance-Bounding Protokolls entfällt.

Die Schlüsselableitungsfunktion 138 der Chipkarte wird nach Erhalt der Positionsdaten durch die Chipkarte ausgeführt. Die Schlüsselableitungsfunktion kann in Antwort auf den Erhalt der Positionsdaten oder zu einem späteren Zeitpunkt, zum Beispiel bei Aufruf der Chipkartenfunktion 110, an einem vordefinierten Zeitpunkt oder nach einer Nutzerinteraktion mit der Chipkarte ausgeführt werden. Insbesondere kann eine Nutzeraktion den Empfang bzw. die Ermittlung der Positionsdaten und eine daran unmittelbar anschließende Schlüsselableitung initiieren. Die Schlüsselableitungsfunktion generiert aus einem im Speicher 104 gespeicherten Datenwert 120 und den von der Lokalisierungseinheit empfangenen Positionsdaten einen abgeleiteten kryptographischen Schlüssel 116. Dieser ist sowohl von dem Datenwert 120 als auch von den Positionsdaten und damit von der Position der Chipkarte abhängig.

Der positionsabhängige kryptographische Schlüssel 116 wird bei Ausführung der Chipkartenfunktion 110 verwendet, um eine kryptographische Operation durchzuführen. Bei der kryptographischen Operation kann es sich dabei um die Verschlüsselung oder Signierung eines oder mehrerer Attribute 121, die in dem Speicher 104 der Chipkarte geschützt gespeichert sind, handeln. Die ein oder mehreren signierten oder verschlüsselten Attribute 121 können danach an ein anderes Computersystem, zum Beispiel das Terminal-Computersystem 160 oder ein mit diesem über ein Netzwerk verbundenes Computersystem 170 übermittelt werden.

Das Terminal Computersystem und/oder das weitere Computersystem 170 können eine komplementäre kryptographische Operation auf den ein oder mehreren verschlüsselten oder signierten Attributen durchführen. Bei der komplementären kryptographischen Operation kann es sich zum Beispiel um die Verifizierung der Signatur des Attributes mit einem Referenzschlüssel 162 oder um die Entschlüsselung der ein oder mehreren empfangenen verschlüsselten Attribute mit dem Referenzschlüssel 162 handeln. Der Referenzschlüssel 162 ist dabei identisch mit dem durch die Chipkarte generierten positionsabhängigen Schlüssel 116 oder bildet mit diesem zusammen ein asymmetrisches kryptographisches Schlüsselpaar.

Der Referenzschlüssel 162 ist in einem Speicher 136, 172 des Terminals und/oder des anderen Computersystems geschützt gespeichert. Alternativ zu einem bereits berechneten und gespeicherten Referenzschlüssel verfügt das Terminal-Computersystem 160 oder das weitere Computersystem 140 über die gleiche Schlüsselableitungsfunktion 138 wie auch die Chipkarte und hat außerdem den gleichen Datenwert 120 geschützt gespeichert bzw. ermöglicht einem Nutzer die Eingabe des Datenwertes 120 in der Form eines Passworts.

Fig. 1 zeigt den Fall, dass das Terminal den Referenzsehlüssel 162 gespeichert hat, aber nicht über eine Schlüsselableitungsfunktion verfügt, wohingegen das Computersystem 170 den Referenzschlüssel neu berechnet, jedoch sind auch andere Systeme möglich, bei denen das Terminal keine komplementäre kryptographische Funktion ausführt oder über eine Schlüsselableitungsfunktion verfügt. Das Computersystem 170, in welchem der Referenzschlüssel nicht direkt gespeichert ist, verfügt über ein Lokalisierungsmodul oder eine Schnittstelle 118a zu einer Lokalisierungseinheit 130, um die zweiten Positionsdaten zur Berechnung des Referenzschlüssels 162 empfangen zu können. Die Schlüsselableitungsfunktion 138 des Computersystems 170 generiert daraufhin basierend auf den zweiten Positionsdaten und dem Datenwert 120 den Referenzschlüssel 162.

In anderen Anwendungsszenarien und Implementierungsvarianten kann die komplementäre kryptographische Operation auch darin bestehen, ein auf dem Terminal-Computersystem 160 oder dem weiteren Computersystem 170 geschützt gespeichertes Attribut 164 mit dem Referenzschlüssel 162 zu verschlüsseln oder zu signieren, und das verschlüsselte oder signierte Attribut an die Chipkarte 102 zu übermitteln. In diesem Fall wird die kryptographische Operation der Chipkarte 102 nach der komplementären kryptographischen Operation des Terminals 160 oder des Computersystems 170 ausgeführt und beinhaltet zum Beispiel die Entschlüsselung des verschlüsselten Attributes oder die Verifikation der Signatur des Attributs mit dem positionsabhängigen Schlüssel 116.

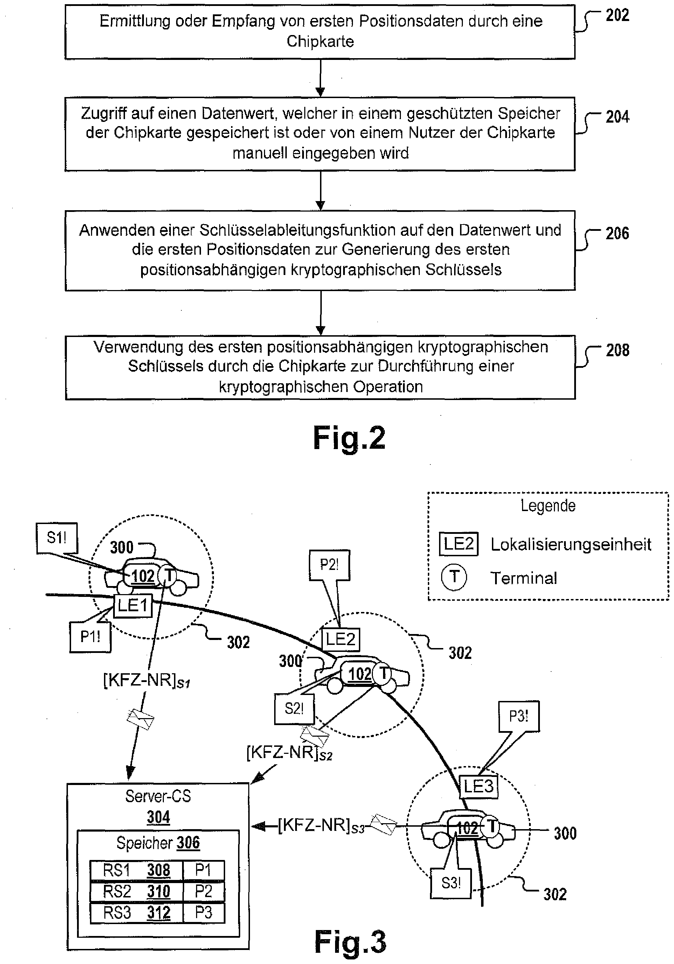

**Figur 2** zeigt ein Flussdiagramm eines positionsabhängigen kryptografischen Verfahrens. In Schritt 202 ermittelt oder empfängt die Chipkarte 102 erste Positionsdaten, die die Position der Chipkarte 102 zumindest näherungsweise wiedergeben. Im Schritt 204 greift die Chipkarte 102 auf einen Datenwert 120 zu, welcher in einem geschützten Speicher 104 der Chipkarte 102 gespeichert ist oder welcher manuell von einem Nutzer der Chipkarte 102 über eine entsprechende Schnittstelle eingegeben wurde. Schritt 204 kann auch vor oder parallel zu Schritt 202 erfolgen. In Schritt 206 wendet die Chipkarte 102 eine Schlüsselableitungsfunktion 138 auf die Positionsdaten und auf den Datenwert 120 an, um dadurch einen ersten positionsabhängigen kryptographischen Schlüssel 116 zu berechnen. Der Schlüssel 116 kann nun in Schritt 208 durch die Chipkarte 102 zur Durchführung einer kryptographischen (Teil-)Operation verwendet werden. Die kryptographische (Teil-)Operation kann beispielsweise im Zuge der Ausführung einer Chipkartenfunktion 110 durchgeführt werden, nachdem sich ein Nutzer und gegebenenfalls weitere Geräte, wie etwa die Lokalisierungseinheit 130 und/oder das Terminal 160, gegenüber der Chipkarte 102 erfolgreich authentifiziert haben und nachdem der Nutzer über eine Nutzer-Aktion die Ausführung der Chipkartenfunktion 110 initiiert.

**Figur 3** zeigt schematisch ein Anwendungsszenario für eine Chipkarte 102 und mehrere Lokalisierungseinheiten LE1, LE2, LE3 im Kontext eines Kraftfahrzeug-Maut-Systems. Ein Fahrer eines Kraftfahrzeuges 300 besitzt eine Chipkarte 102. In dem Fahrzeug 300 befindet sich ein portables oder fest installiertes Terminal T, über welches die Chipkarte 102 Daten mit einem Server-Computersystem 304 austauschen kann, z.B. über eine Mobilfunkverbindung. Das Server-Computersystem 304 dient der zentralen Erfassung der Wegstrecke, die eine Vielzahl von Kraftfahrzeugen, die bei dem Mautsystem registriert sind, zurücklegen. Die dicke gekrümmte Linie markiert den Fahrtweg des Fahrzeuges 300 ausgehend von Position P1 über P2 bis zu Position P3. Sobald sich das Fahrzeug einer immobilen Lokalisierungseinheit LE1 soweit genähert hat, dass sich die Lokalisierungseinheit LE1 innerhalb eines in einem Distance-Bounding Protokoll der Chipkarte spezifizierten Maximalabstandes 302 befindet, empfängt und verarbeitet die Chipkarte 102 Positionsdaten P1 von der Lokalisierungseinheit LE1. Dies kann so erfolgen, dass die Chipkarte 102 kontinuierlich Positionsdaten von allen Lokalisierungseinheiten LE1, LE2, LE3 empfängt, deren Signalstärke am Ort des Fahrzeugs 300 für einen Empfang ausreichend ist, aber nur solche Positionsdaten zur Schlüsselgenerierung verwendet, die nachweislich von einer Lokalisierungseinheit LE2 innerhalb des Maximalabstandes 302 empfangen wurden.

Die Chipkarte 102 berechnet nach Empfang der ersten Positionsdaten P1 von der Lokalisierungseinheit LE1, die innerhalb des aktuellen Maximalabstandes 302 liegt, einen für die Position P1 spezifischen, positionsabhängigen kryptographischen Schlüssel S1. Dieser Schlüssel wird verwendet, um einen eindeutigen Bezeichner, wie beispielsweise die Zulassungsnummer KFZ-NR des Fahrzeuges 300 zu verschlüsseln und in verschlüsselter Weise zusammen mit den unverschlüsselten Positionsdaten P1 und gegebenenfalls zusammen mit einer Zeitinformation an den Server 304 zu senden. Entlang des Weges P1, P2, P3 sind zwei weitere Lokalisierungseinheit LE2 und LE3 installiert. Sobald sich das Fahrzeug 300 soweit der Lokalisierungseinheit LE2 genähert hat, dass diese innerhalb des Maximalabstandes 302 des Distance-Bounding Protokolls der Chipkarte 102 liegt, wird für die Positionen P2 ein positionsabhängiger Schlüssel S2 durch die Chipkarte berechnet. Für Position P3 wird in analoger Weise Schlüssel S3 berechnet. Mit den Schlüsseln S2 und S3 wird jeweils wie zuvor beschrieben die Zulassungsnummer KFZ-NR verschlüsselt und gegebenenfalls zusammen mit weiteren Daten an das Server-Computersystem 304 übermittelt.

Das Server Computersystem 304 umfasst einen Datenspeicher 306, in welchem mehrere ortsspezifische Referenzschlüssel 308-312 gespeichert sind. Referenzschlüssel 308 ist identisch mit Schlüssel S1 oder bildet zusammen mit diesem ein asymmetrisches kryptographisches Schlüsselpaar. Referenzschlüssel 310 ist identisch mit Schlüssel S2 oder bildet zusammen mit diesem ein asymmetrisches kryptographisches Schlüsselpaar. Referenzschlüssel 312 ist identisch mit Schlüssel S3 oder bildet zusammen mit diesem ein asymmetrisches kryptographisches Schlüsselpaar.

In dem Speicher 306 sind die Referenzschlüssel mit den Positionsdaten P1-P3, die die Grundlage ihrer jeweiligen Berechnung darstellen, verknüpft gespeichert. Das Server-Computersystem ist daher in der Lage, nach Erhalt einer verschlüsselten Zulassungsnummer KFZ-NR und entsprechender Ortsinformation P1, P2 oder P3 den für die Entschlüsselung geeigneten Referenzschlüssel zu identifizieren und zur Entschlüsselung zu verwenden. Die entschlüsselte Zulassungsnummer kann in Verbindung mit der übermittelten Orts- und gegebenenfalls auch Zeitinformation zur automatischen Erhebung einer Maut durch das Server-Computersystem 304 verwendet werden.

Das vorangehend dargestellte Mautsystem ist besonders sicher, weil das Fahrzeug 300 nur Positionsdaten P1, P2, P3 übermittelt, die von vertrauenswürdigen Lokalisierungseinheiten LE1, LE2, LE3 stammen. Dabei stellt das Distance-Bounding Protokoll die räumliche Nähe zwischen Chipkarte 102 und Lokalisierungseinheit sicher. Zudem werden persönliche Daten wie bspw. die Zulassungsnummer KFZ-NR nur verschlüsselt mit Hilfe mehrerer, ortsspezifischer Schlüssel S1, S2, S3 übertragen werden.

## Patentansprüche

1. Verfahren zur Durchführung einer kryptographischen Operation, wobei das Verfahren umfasst:
- Ermittlung oder Empfang (202) von ersten Positionsdaten (G; P1, P2, P3) durch eine Lokalisierungseinheit (130, LE1-LE3), wobei die Positionsdaten die Position der Lokalisierungseinheit (130, LE1-LE3) angeben;
- Übermittlung der Positionsdaten (G) von der Lokalisierungseinheit (130, LE1-LE3) an die Chipkarte (102) über eine kontaktlose Schnittstelle (118a, 118b) unter Verwendung eines kryptographischen Protokolls (114);
- Ausführung eines Distance-Bounding Protokolls (112) zwischen der Chipkarte (102) und der Lokalisierungseinheit (130, LE1-LE3), wobei das Distance-Bounding Protokoll (112) genau dann erfolgreich abschließt, wenn der räumliche Abstand zwischen der Chipkarte (102) und der Lokalisierungseinheit (130, LE1-LE3) einen vorgegebenen Maximalabstand (114, 302) nicht überschreitet;
- nur im Falle eines erfolgreichen Abschlusses des Distance-Bounding Protokolls (112), Ausführung einer Chipkartenfunktion (110) durch die Chipkarte (102), wobei die Chipkartenfunktion (110) die übermittelten Positionsdaten (G) als die ersten Positionsdaten zur Angabe der aktuellen Position der Chipkarte (102) verwendet
- Zugriff (204) der Chipkarte (102) auf einen Datenwert (120), welcher in einem geschützten Speicher (104) der Chipkarte (102) gespeichert ist oder von einem Nutzer der Chipkarte (102) manuell eingegeben wird;
- Anwenden (206) einer Schlüsselableitungsfunktion (138) durch die Chipkarte (102) auf den Datenwert (120) und die ersten Positionsdaten zur Generierung eines ersten positionsabhängigen kryptographischen Schlüssels (116; S1, S2, S3); und
- Verwendung (208) des ersten positionsabhängigen kryptographischen Schlüssels (116; S1, S2, S3) durch die Chipkarte (102) zur Durchführung einer schlüsselabhängigen kryptographischen Teiloperation.

2. Verfahren nach Anspruch 1, wobei es sich bei dem Datenwert (120) um einen kryptographischen Schlüssel oder ein Passwort handelt, mit dem sich ein Nutzer gegenüber der Chipkarte (102) authentifizieren kann.

3. Verfahren nach einem der vorigen Ansprüche, wobei:
- die ermittelten ersten Positionsdaten (G) die Position der Chipkarte (102) angeben; bzw.
- die empfangenen ersten Positionsdaten (P1; P2; P3) von einer sendenden Lokalisierungseinheit (130, LE1-LE3) stammen und deren Position angeben, die im Fall, dass die Lokalisierungseinheit (130; LE1-LE3) von der Chipkarte (102) um nicht mehr als einen vorgegebenen Maximalabstand (114; 302) entfernt ist, als Näherung für die Position der Chipkarte (102) verwendet wird.

4. Verfahren nach einem der vorigen Ansprüche, wobei die Schlüsselableitungsfunktion (138) eine Konkatenierung des Datenwerts (120) mit den ersten Positionsdaten (G; P1, P2, P3) umfasst, wobei die ersten Positionsdaten aus ein oder mehreren Datenelementen (G1, G2, G3, ..., Gn) bestehen, wobei die Konkatenierung gemäß eines vorgegebenen Sortierschemas von dem Datenwert (120) und den ersten Positionsdaten erfolgt, wobei im Falle, dass die Positionsdaten aus mehreren Datenelementen bestehen, diese ebenfalls gemäß des Sortierschemas sortiert konkateniert werden.

5. Verfahren nach einem der vorigen Ansprüche, wobei die Schlüsselableitungsfunktion (138) zusätzlich einen Zufallswert für die Generierung des ersten positionsabhängigen kryptographischen Schlüssels (116) verwendet.

6. Verfahren nach einem der vorigen Ansprüche, wobei es sich bei der kryptographischen Teiloperation handelt um die:
a) Generierung einer Signatur, oder
b) Signaturprüfung, oder
c) Verschlüsselung ein oder mehrerer Attribute (121), oder
d) Entschlüsselung ein oder mehrerer Attribute (121).

7. Verfahren nach einem der vorigen Ansprüche, ferner umfassend einen auf einem Computersystem (160, 170) auszuführenden Abschnitt zum Bereitstellen eines kryptographischen Referenzschlüssels (162), der mit dem ersten positionsabhängigen Schlüssel (116) identisch ist oder ein asymmetrisches kryptographisches Schlüsselpaar bildet, durch entweder
- Lesen des kryptographischen Referenzschlüssels (162) von einem operativ mit dem Computersystem (160, 170) gekoppelten geschützten Speichermedium (136),
oder
- Generieren des kryptographischen Referenzschlüssels (162) unter
• Ermittlung oder Empfang von zweiten Positionsdaten durch das Computersystem (160, 170);
• Zugriff auf den Datenwert (120), welcher in einem an das Computersystem (160, 170) operativ gekoppelten Speicher (172) ebenfalls geschützt gespeichert ist oder manuell in das Computersystem (160, 170) eingegeben wird;
• Anwenden der Schlüsselableitungsfunktion (138) auf den Datenwert (120) und die zweiten Positionsdaten;
und weitere zwischen der Chipkarte (102) und dem Computersystem (160, 170) durchzuführende Abschnitte zur:
- Authentifizierung des Computersystems (160, 170) gegenüber der Chipkarte (102); und
- Im Falle einer erfolgreichen Authentifizierung, Durchführung einer zu der kryptographischen Teiloperation komplementären kryptographischen Operation mit dem kryptographischen Referenzschlüssel (172) auf zumindest einem Attribut (121, 164), welches vor oder nach Durchführung der komplementären kryptographischen Operation zwischen der Chipkarte (102) und dem Computersystem (160, 170) ausgetauscht wird.

8. Verfahren nach Anspruch 7 in Rückbeziehung auf Anspruch 6, wobei es sich bei der komplementären kryptographischen Operation handelt um eine:
- Signaturprüfung der in a) generierten Signatur, wobei das zumindest eine Attribut (121) in der Chipkarte (102) geschützt gespeichert und nach Signierung durch die Chipkarte (102) an das Computersystem (170) zur Durchführung der Signaturprüfung übertragen wird, oder
- Signierung des zumindest einen Attributs (121), wobei für die hierbei erzeugte Signatur zu einem späteren Zeitpunkt gemäß b) eine Signaturprüfung vorgenommen wird, wobei das zumindest eine Attribut (164) in dem Computersystem (160) geschützt gespeichert ist und nach Signierung durch das Computersystem an die Chipkarte übertragen wird, oder
- Entschlüsselung des zumindest einen Attributs, welches in c) verschlüsselt wurde, wobei das zumindest eine Attribut (121) in der Chipkarte (102) geschützt gespeichert ist und nach Verschlüsselung durch die Chipkarte (102) an das Computersystem (160, 170) zur Entschlüsselung durch das Computersystem (160, 170) übertragen wird, oder
- Verschlüsselung des zumindest einen Attributs (164), welches an einem späteren Zeitpunkt in d) entschlüsselt wird, wobei das zumindest eine Attribut (164) in dem Computersystem (160) geschützt gespeichert und nach Verschlüsselung durch das Computersystem (160) an die Chipkarte (102) zur Entschlüsselung durch die Chipkarte (102) übertragen wird.

9. Verfahren nach einem der vorigen Ansprüche, ferner umfassend die Authentifizierung der Lokalisierungseinheit (130; LE1-LE3) gegenüber der Chipkarte (102) durch den Nachweis mittels des Distance-Bounding-Protokolls (112), dass sich die Lokalisierungseinheit (130; LE1-LE3) innerhalb des räumlichen Maximalabstands (114; 302) befindet.

10. Verfahren nach einem der vorigen Ansprüche, wobei die Positionsdaten eine Anzahl von Ortskennungen umfasst, welche in ihrer Gesamtheit einen Ort identifizieren.

11. Verfahren nach Anspruch 10, wobei jede Ortskennung eine Netzkennung darstellt, die ein Datenkommunikationsnetz identifiziert.

12. Computerprogrammprodukt mit von einem Computersystem (160, 170) ausführbaren Instruktionen zur Durchführung eines Verfahrens nach einem der vorhergehenden Ansprüche.

13. Chipkarte (102), aufweisend:
- ein Speichermedium (104) zur geschützten Speicherung eines Datenwertes (120) und/oder eine Schnittstelle zur manuellen Eingabe des Datenwertes durch einen Nutzer, dem die Chipkarte (102) zugeordnet ist; und
- Mittel zur Ermittlung oder zum Empfang (118a) von ersten Positionsdaten (G; P1, P2, P3);
wobei Chipkarte (102) weiterhin eingerichtet ist zum:
- Zugriff auf den gespeicherten oder eingegebenen Datenwert (120);
- Anwenden einer Schlüsselableitungsfunktion (138) auf den Datenwert (120) und die ersten Positionsdaten (G; P1, P2, P3) zur Generierung eines ersten positionsabhängigen kryptographischen Schlüssels (116);
- Verwenden des ersten positionsabhängigen kryptographischen Schlüssels (116) zur Durchführung einer kryptographischen Operation
wobei: die empfangenen ersten Positionsdaten (G; P1, P2, P3) von einer sendenden Lokalisierungseinheit stammen (130, LE1-LE3) und deren Position angeben, die im Fall, dass deren Abstand von der Chipkarte (102) einen vorgegebenen Maximalabstand (114; 302) nicht überschreitet, als Näherung für die Position der Chipkarte (102) verwendet wird.

14. Chipkarte (102) nach Anspruch 13 in der Alternative mit Mitteln zum Empfang der ersten Positionsdaten, wobei:
- die Mittel zum Empfang der ersten Positionsdaten (G; P1, P2, P3) als kontaktlose Schnittstelle (118a, 118b) zum Datenaustausch mit einer Lokalisierungseinheit (130) ausgebildet sind;
- die ersten Positionsdaten (G; P1, P2, P3) in verschlüsselter Form von der Lokalisierungseinheit (130; LE1-LE3) an die Chipkarte (102) übertragen werden; und
- die Chipkarte (102) ferner ein Distance-Bounding-Modul (123a) zur Ausführung eines Distance-Bounding Protokolls (112) mit der Lokalisierungseinheit (130; LE1-LE3) aufweist, das genau dann erfolgreich abschließt, wenn der räumliche Abstand der Chipkarte (102) von der Lokalisierungseinheit (130; LE1-LE3) einen vorgegebenen Maximalabstand (114; 302) nicht überschreitet.

## Claims

1. A method for carrying out a cryptographic operation, the method comprising:
- ascertaining or receiving (202) first position data (G; P1, P2, P3) by a localization unit (130, LE1-LE3), wherein the position data indicates the position of the localization unit (130, LE1-LE3);
- transmitting the position data (G) from the localization unit (130, LE1-LE3) to the chip card (102) via a contactless interface (118a, 118b) using a cryptographic protocol (114);
- executing a distance bounding protocol (112) between the chip card (102) and the localization unit (130, LE1-LE3), wherein the distance bounding protocol (112) concludes successfully precisely when the spatial distance between the chip card (102) and the localization unit (130, LE1-LE3) does not exceed a predefined maximum distance (114, 302);
- executing a chip card function (110) by the chip card (102) only if the distance bounding protocol (112) has been successfully concluded, wherein the chip card function (110) uses the transmitted position data (G) as the first position data for indicating the current position of the chip card (102);
- accessing (204) a data value (120) by the chip card (102), which is stored in a protected memory (104) of the chip card (102) or is manually entered by a user of the chip card (102);
- applying (205) a key derivation function (138) by the chip card (102) to the data value (120) and the first position data for generating a first position-dependent cryptographic key (116; S1, S2, S3); and
- using (208) the first position-dependent cryptographic key (116; S1, S2, S3) by the chip card (102) for carrying out a key-dependent cryptographic sub-operation.

2. The method according to claim 1, wherein the data value (120) is a cryptographic key or a password which a user can use for authentication with respect to the chip card (102).

3. The method according to any one of the preceding claims, wherein:
- the ascertained first position data (G) indicates the position of the chip card (102), or
- the received first position data (P1; P2; P3) stems from a transmitting localization unit (130, LE1-LE3) and indicates the position thereof, which is used as an approximation for the position of the chip card (102) in the event that the localization unit (130; LE1-LE3) is located away from the chip card (102) by no more than a predefined maximum distance (114, 302).

4. The method according to any one of the preceding claims, wherein the key derivation function (138) includes a concatenation of the data value (120) with the first position data (G; P1, P2, P3), the first position data being composed of one or more data elements (G1, G2, G3, ... Gn), the concatenation taking place according to a predefined sorting pattern of the data value (120) and the first position data, in the event that the position data is composed of multiple data elements, these data elements likewise being concatenated in a sorted manner according to the sorting pattern.

5. The method according to any one of the preceding claims, wherein the key derivation function (138) additionally uses a random value for the generation of the first position-dependent cryptographic key (116).

6. The method according to any one of the preceding claims, wherein the cryptographic sub-operation is the:
a) generation of a signature; or
b) signature check; or
c) encryption of one or more attributes (121); or
d) decryption of one or more attributes (121).

7. The method according to any one of the preceding claims, furthermore comprising a section, to be executed on a computer system (160, 170), for providing a cryptographic reference key (162), which is identical to the first position-dependent key (116) or forms an asymmetric cryptographic key pair, either by
- reading the cryptographic reference key (162) from a protected storage medium (136) operatively coupled to the computer system (160, 170),
or
- generating the cryptographic reference key (162) by
• ascertaining or receiving second position data by the computer system (160, 170);
• accessing the data value (120), which is likewise stored in a protected manner in a memory (172) operatively coupled to the computer system (160, 170) or is entered manually into the computer system (160, 170);
• applying the key derivation function (138) to the data value (120) and the second position data;
and further sections to be carried out between the chip card (102) and the computer system (160, 170) for:
- authenticating the computer system (160, 170) with respect to the chip card (102); and
- in the event of successful authentication, carrying out a cryptographic operation, which is complementary to the cryptographic sub-operation, with the cryptographic reference key (172) for at least one attribute (121, 164), which is exchanged between the chip card (102) and the computer system (160, 170) before or after the complementary cryptographic operation is carried out.

8. The method according to claim 7, with back-reference to claim 6, wherein the complementary cryptographic operation is:
- a signature check of the signature generated in a), wherein the at least one attribute (121) is stored in the chip card (102) in a protected manner and, after signing, is transmitted by the chip card (102) to the computer system (170) for carrying out the signature check; or
- a signing of the at least one attribute (121), wherein a signature check for the signature generated thereby is carried out at a later point in time according to b), wherein the at least one attribute (164) is stored in the computer program (160) in a protected manner and, after signing, is transmitted by the computer system to the chip card; or
- a decryption of the at least one attribute encrypted in c), wherein the at least one attribute (121) is stored in the chip card (102) in a protected manner and, after encryption, is transmitted by the chip card (102) to the computer system (160, 170) for decryption by the computer system (160, 170); or
- an encryption of the at least one attribute (164), which is decrypted at a later point in time in d), wherein the at least one attribute (164) is stored in the computer system (160) in a protected manner and, after encryption, is transmitted by the computer system (160) to the chip card (102) for decryption by the chip card (102).

9. The method according to any one of the preceding claims, furthermore comprising the authentication of the localization unit (130; LE1-LE3) with respect to the chip card (102) by the verification by way of the distance bounding protocols (112) that the localization unit (130; LE1-LE3) is located within the spatial maximum distance (114; 302).

10. The method according to any one of the preceding claims, wherein the position data comprises a plurality of location identifiers that, in their totality, identify a location.

11. The method according to claim 10, wherein each location identifier constitutes a network identifier that identifies a data communication network.

12. A computer program product, comprising instructions executable by a computer system (160, 170) for carrying out a method according to any one of the preceding claims.

13. A chip card (102), comprising:
- a storage medium (104) for the protected storage of a data value (120) and/or an interface for the manual entry of the data value by a user to whom the chip card (102) is assigned; and
- means for ascertaining or receiving (118a) first position data (G; P1, P2, P3); wherein the chip card (102) is furthermore configured to:
- access the stored or entered data value (120);
- apply a key derivation function (138) to the data value (120) and the first position data (G; P1, P2, P3) for generating a first position-dependent cryptographic key (110);
- use the first position-dependent cryptographic key (116) for carrying out a cryptographic operation;
wherein the received first position data (G; P1, P2, P3) stems from a transmitting localization unit (130, LE1-LE3) and indicates the position thereof, which is used as an approximation for the position of the chip card (102) if the distance thereof from the chip card (102) does not exceed a predefined maximum distance (114, 302).

14. The chip card (102) according to claim 13 in the alternative comprising means for receiving the first position data, wherein:
- the means for receiving the first position data (G; P1, P2, P3) are designed as a contactless interface (118a, 118b) for the data exchange with a localization unit (130);
- the first position data (G; P1, P2, P3) is transmitted in encrypted form from the localization unit (130; LE1-LE3) to the chip card (102); and
- the chip card (102) furthermore comprises a distance bounding module (123a) for executing a distance bounding protocol (112) with the localization unit (130; LE1-LE3), which concludes successfully precisely when the spatial distance between the chip card (102) and the localization unit (130; LE1-LE3) does not exceed a predefined maximum distance (114, 302).

## Revendications

1. Procédé d'exécution d'une opération cryptographique, le procédé comprenant ;
- la détermination ou la réception (202) de premières données de position (G ; P1, P2, P3) par une unité de localisation (130, LE1 à LE3), où les données de position indiquent la position de l'unité de localisation (130, LE1 à LE3) ;
- la transmission des données de position (G) de l'unité de localisation (130, LE1 à LE3) à la carte à puce (102) par le biais d'une interface sans contact (118a, 118b) moyennant l'emploi d'un protocole cryptographique (114) ;
- l'exécution d'un protocole délimiteur de distance, distance-bounding, (112) entre la carte à puce (102) et l'unité de localisation (130, LE1 à LE3), où le protocole de distance-bounding (112) déduit alors avec succès quand la distance spatiale entre la carte à puce (102) et l'unité de localisation (130, LE1 à LE3) ne dépasse pas un intervalle maximal prédéfini (114 ; 302) ;
- uniquement dans le cas d'une réalisation réussie du protocole distance - bounding (112), l'exécution d'une fonction de carte à puce (110) par la carte à puce (102), où la fonction de carte à puce (110) emploie les données de position (G) transmises en tant que premières données de position pour l'indication de la position actuelle de la carte à puce (102),
- l'accès (204) de la carte à puce (102) à une valeur de donnée (120), laquelle est stockée dans une mémoire (104) sécurisée de la carte à puce (102) ou est saisie manuellement par un utilisateur de la carte à puce (102) ;
- l'emploi (205) d'une fonction de dérivation de clé (138) par la carte à puce (102) pour la date de valeur (120) et les premières données de position pour la génération d'une première clé cryptographique (116 ; S1, S2, S3) dépendant de la position ; et
- l'utilisation (208) de la première clé cryptographique (116 ; S1, S2, S3) dépendant de la position par la carte à puce (102) pour l'exécution d'une opération partielle cryptographique dépendant de la clé.

2. Procédé selon la revendication 1, dans lequel, dans le cas de la valeur de donnée (120), il s'agit d'une clé cryptographique ou d'un mot de passe, avec laquelle ou lequel un utilisateur peut s'authentifier vis-à-vis de la carte à puce (102).

3. Procédé selon l'une des revendications précédentes, dans lequel :
- les premières données de position (G) déterminées indiquent la position de la carte à puce (102) ; respectivement
- les premières données de position (P1 ; P2 ; P3) reçues proviennent d'une unité de localisation (130, LE1 à LE3) émettrice et indiquent sa position qui, dans le cas où l'unité de localisation (130, LE1 à LE3) n'est pas éloignée de la carte à puce (102) de plus d'un intervalle maximal prédéfini (114 ; 302), est employée en tant qu'approximation de la position de la carte à puce (102).

4. Procédé selon l'une des revendications précédentes, dans lequel la fonction de dérivation de clé (138) comprend une concaténation de la valeur de donnée (120) avec les premières données de position (G ; P1, P2, P3), où les premières données de position sont constituées d'un ou de plusieurs éléments de donnée (G1, G2, G3, ..., Gn), où la concaténation a lieu selon un schéma de tri prédéfini de la valeur de donnée (120) et des premières données de position, où, dans le cas où les données de position sont constituées de plusieurs éléments de données, ceux-ci sont également triés et concaténés selon le schéma de tri.

5. Procédé selon l'une des revendications précédentes, dans lequel la fonction de dérivation de clé (138) emploie en plus une valeur aléatoire pour la génération de la première clé cryptographique (116) dépendant de la position.

6. Procédé selon l'une des revendications précédentes, dans lequel, dans le cas de l'opération partielle cryptographique, il s'agit :
a) d'une génération d'une signature, ou
b) d'une vérification de signature, ou
c) d'un cryptage d'un ou de plusieurs attributs (121), ou
d) d'un décryptage d'un ou de plusieurs attributs (121).

7. Procédé selon l'une des revendications précédentes, comprenant en outre une section à effectuer sur un système informatique (160, 170) pour l'établissement d'une clé de référence (162) cryptographique qui est identique à la première clé (116) dépendante de la position ou forme une paire de clés cryptographiques asymétriques par soit
- la lecture de la clé de référence (162) cryptographique par un support de stockage (136) protégé couplé de manière opérationnelle avec le système informatique (160, 170),
soit
- la génération de la clé de référence (162) cryptographique moyennant
• la détermination ou la réception de deuxièmes données de position par le système informatique (160, 170) ;
• l'accès à la valeur de donnée (120), laquelle est également stockée protégée dans une mémoire (172), couplée de manière opérationnelle avec le système informatique (160, 170), ou est saisie manuellement dans le système informatique (160, 170) ;
• l'emploi de la fonction de dérivation de clé (138) pour la valeur de donnée (120) et les deuxièmes données de position ;
et d'autres segments à exécuter entre la carte à puce (102) et le système informatique (160, 170) pour :
- l'authentification du système informatique (160, 170) vis-à-vis de la carte à puce (102) ; et
- dans le cas d'une authentification réussie, l'exécution d'une opération cryptographique complémentaire à l'opération partielle cryptographique avec la clé de référence (172) cryptographique pour au moins un attribut (121, 164), lequel est échangé avant ou après l'exécution de l'opération cryptographique complémentaire entre la carte à puce (102) et le système informatique (160, 170).

8. Procédé selon la revendication 7, en faisant référence à la revendication 6, dans lequel, dans le cas de l'opération cryptographique complémentaire il s'agit :
- d'une vérification de signature de la signature générée en a), où l'au moins un attribut (121) est stocké protégé dans la carte à puce (102) et est transmis après la signature par la carte à puce (102) au système informatique (170) pour l'exécution de la vérification de signature, ou
- d'une signature de l'au moins un attribut (121), où, pour la signature ainsi créée, on procède à une vérification de signature selon b) à un moment ultérieur, où l'au moins un attribut (164) est stocké protégé dans le système informatique (160) et est transmis après la signature vers la carte à puce par le système informatique, ou
- d'un décryptage de l'au moins un attribut, lequel a été chiffré en c), où l'au moins un attribut (121) est stocké protégé dans la carte à puce (102) et est transmis après le cryptage par la carte à puce (102) au système informatique (160, 170) pour un décryptage par le système informatique (160, 170), ou
- d'un cryptage de l'au moins un attribut (164) lequel est décrypté à un moment ultérieur dans d), où l'au moins un attribut (164) est stocké protégé dans le système informatique (160) et est transmis après le cryptage par le système informatique (160) à la carte à puce (102) pour le décryptage par la carte à puce (102).

9. Procédé selon l'une des revendications précédentes, comprenant en outre l'authentification de l'unité de localisation (130 ; LE1 à LE3) vis-à-vis de la carte à puce (102) par la mise en évidence au moyen du protocole distance-bounding (112) que l'unité de localisation (130 ; LE1 à LE3) se trouve à l'intérieur de l'intervalle spatial maximal (114 ; 302).

10. Procédé selon l'une des revendications précédentes, dans lequel les données de position comprennent un certain nombre d'indicateurs d'emplacement, lesquels identifient un lieu dans sa globalité.

11. Procédé selon la revendication 10, dans lequel chaque indicateur d'emplacement représente un indicateur de réseau qui identifie un réseau de communication de données.

12. Produit de programme informatique doté d'instructions exécutables par un système informatique (160, 170) pour l'exécution d'un procédé selon l'une des revendications précédentes.

13. Carte à puce (102) présentant :
- un support de stockage (104) pour le stockage sécurisé d'une première valeur de donnée (120) et/ou une interface pour la saisie manuelle d'une valeur de donnée par un utilisateur, auquel la carte à puce (102) est attribuée ; et
- des moyens pour la détermination ou pour la réception (118a) de premières données de position (G ; P1, P2, P3) ;
où la carte à puce (102) est prévue en outre pour :
- un accès à la valeur de donnée (120) stockée ou saisie ;
- l'emploi d'une fonction de dérivation de clé (138) pour la valeur de donnée (120) et les premières données de position (G ; P1, P2, P3) pour la génération d'une première clé cryptographique (116) dépendant de la position ;
- l'utilisation de la première clé cryptographique (116) dépendant de la position pour l'exécution d'une opération cryptographique
où les premières positions de donnée (G ; P1, P2, P3) reçues proviennent d'une unité de localisation (130, LE1 à LE3) émettrice et indiquent sa position, qui, dans le cas où sa distance par rapport à la carte à puce (102) ne dépasse pas un intervalle maximal prédéfini (114 ; 302) est employée en tant qu'approximation de la position de la carte à puce (102).

14. Carte à puce (102) selon la revendication 13, en alternative avec des moyens pour la réception des premières données de position, dans laquelle :
- les moyens pour la réception des premières données de position (G ; P1, P2, P3) sont conçus sous la forme d'une interface sans contact (118a, 118b) pour l'échange de données avec une unité de localisation (130),
- les premières données de position (G ; P1, P2, P3) sont transmises sous forme cryptée de l'unité de localisation (130 ; LE1 à LE3) à la carte à puce (102) ; et
- la carte à puce (102) présente en outre un module de distance-bounding (123a) pour l'exécution d'un protocole de distance-bounding (112) avec l'unité de localisation (130 ; LE1 à LE3), qui se conclut alors avec succès lorsque la distance spatiale de la carte à puce (102) par rapport à l'unité de localisation (130 ; LE1 à LE3) ne dépasse pas un intervalle maximal prédéfini (114; 302).
